# EUROPEAN PATENT SPECIFICATION

(11) **EP 0 419 097 B1**
(45) Date of publication and mention of the grant of the patent: **10.05.1995**
(21) Application number: 90309804.4
(22) Date of filing: 07.09.1990
(51) Int. Cl.: G11B 7/08

(54) **Objective lens driving devices**
Objectiv-Linseantriebsanordnungen
Dispositifs d'entraînement d'objectif

(30) Priority: 18.09.1989 JP 241394/89
(43) Date of publication of application: 27.03.1991
(73) Proprietor: SONY CORPORATION, Tokyo 141 (JP)
(72) Inventor: Kume, Hidehiro, c/o Patents Division, Shinagawa-ku, Tokyo 141 (JP); Mitsumori, Koji, c/o Patents Division, Shinagawa-ku, Tokyo 141 (JP); Ishida, Tomoyuki, c/o Patents Division, Shinagawa-ku, Tokyo 141 (JP)
(74) Representative: Cotter, Ivan John

(56) References cited:
- EP-A- 0 358 294
- FR-A- 2 455 331

## Description

This invention relates to objective lens driving devices suitable for use in optical pick-up devices.

An optical pick-up device is known for reading an information signal recorded on an optical disc, or recording an information signal on an optical disc, by irradiating a laser beam on a signal recording surface of the optical disc which is rotated by a disc drive device. This known optical pick-up device is provided with an objective lens drive device. This drive device magnetically displaces an objective lens in the focusing direction and in the tracking direction or in either of these directions, which converges a laser beam emitted from a semiconductor laser on the signal recording surface of the optical disc, so that the laser beam is focused on the signal recording surface thereby accurately scanning recorded tracks thereon.

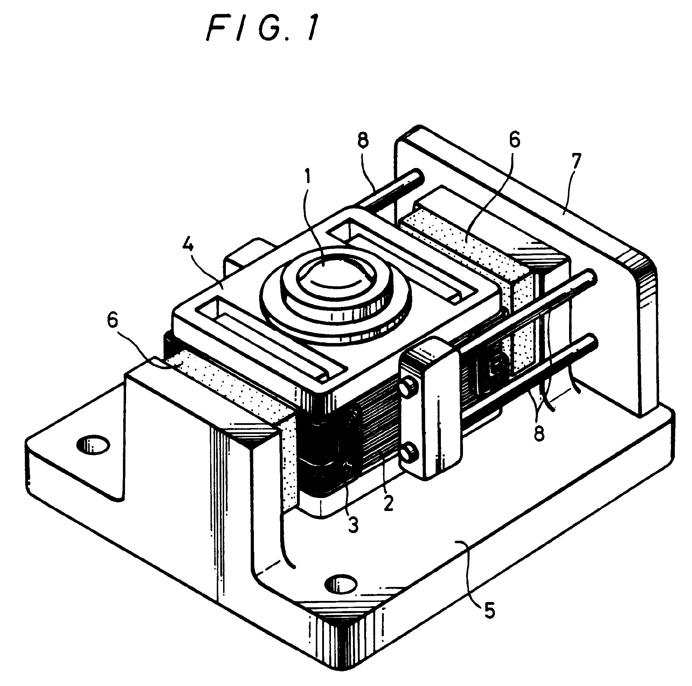

Figure 1 shows an example of an objective lens driving device applied to a known optical pick-up device. An objective lens 1 is supported on a bobbin 4, and a focus control drive coil 2 and a tracking control drive coil 3 are attached to the bobbin 4. The bobbin 4 is located between two magnets 6 which are provided on a base plate 5 in an opposing relation. The bobbin 4 is supported on the base plate 5 in a cantilever fashion by pairs of supporting rods 8 made of resilient metal and extending parallel to each other from an attaching plate 7.

With this objective lens driving device, when a drive current is supplied to the focus control drive coil 2 or to the tracking control drive coil 3, the bobbin 4 is moved by the elastic displacement of the supporting rods 8, whereby the objective lens 1 supported on the bobbin 4 is moved in the focusing direction and in the tracking direction.

In this device the focusing coil and the tracking coil are mounted on the movable bobbin which supports the lens. There is therefore the disadvantage that the optical characteristic of the lens, which may be a plastics lens, is deteriorated by heat generated in the coils, or that, when the coils are deformed by heat, the movement of the bobbin is hindered.

Moreover, a flexible printed circuit board or the like needs to be connected to the coils, which increases the number of parts to be assembled. Furthermore, the movable bobbin is made as small as possible to reduce the weight thereof, so the soldering of the flexible printed circuit board to the ends of the coil is difficult.

In addition, coils of different shapes are used, and many soldering lands are used, so that the centre of gravity of the movable portion cannot be selected with sufficiently high accuracy. This increases the need for inspection during manufacturer, and may affect the characteristics of the device.

Patent Specification EP-A-0 358 294 discloses an optical pick-up device wherein an objective lens in a holder is movable by electro-magnetic means comprising a U-shaped yoke integral with the holder and a pair of magnets mounted on the yoke and cooperating with coil members mounted on a stationary base. This specification was not published until after the priority date of this application.

Patent Specification FR-A-2 455 331 discloses an objective lens supported on leaf springs and carrying a magnetic member which cooperates with coils of a magnetic circuit which is stationary to produce focusing and tracking movements of the lens.

According to one aspect of the invention there is provided an objective lens driving device comprising:
an objective lens mounted in a lens holder;
supporting means having the lens holder and the objective lens attached thereto and being supported such that the lens holder is movable and can be translated in a first direction parallel to the optical axis direction of the objective lens and a second direction perpendicular to said optical axis direction;
a magnetic circuit provided on the lens holder to form a closed magnetic path;
a focusing coil to cooperate with the magnetic circuit to move the objective lens in said first direction and a tracking coil to cooperate with said magnetic circuit to move the objective lens in said second direction, the focusing coil and the tracking coil being opposed to each other with a predetermined spacing relative to the magnetic circuit;
a stationary portion on which the lens holder is mounted by the supporting means, the focusing coil and the tracking coil being mounted on the stationary portion;
wherein the magnetic circuit comprises two yokes disposed symmetrically in relation to the optical axis of the lens and each formed of a pair of plane portions opposed to each other, a coupling portion connecting the pair of plane portions and a magnetic piece provided on one of the plane portions of the yoke;
characterised in that the coupling portions of the yokes are asymmetrical about a straight line passing through the centre of gravity of the movable lens holder so that the coupling portion of each yoke couples the plane portions at positions displaced towards a position at which the supporting means for the lens holder is coupled to the stationary portion.

According to another aspect of the invention there is provided an objective lens driving device comprising:
an objective leans mounted in a lens holder;
supporting means having the lens holder and the objective lens attached thereto and being supported such that the lens holder is movable and can be translated in a first direction parallel to the optical axis direction of the objective lens and a second direction perpendicular to said optical axis direction;
a magnetic circuit provided on the lens holder to form a closed magnetic path;
a focusing coil to cooperate with the magnetic circuit to move the objective lens in said first direction; and
a tracking coil to cooperate with said magnetic circuit to move the objective lens in said second direction, the focusing coil and the tracking coil being opposed to each other with a predetermined spacing relative to the magnetic circuit;
a stationary portion on which the lens holder is mounted by the supporting means, the focusing coil and the tracking coil being mounted on the stationary portion;
characterised in that the magnetic circuit comprises a yoke formed of first and second plane portions, third plane portions opposed to said first and second plane portions with a predetermined spacing, a coupling portion coupling said first, second and third plane portions and magnetic pieces attached to the third plane portions;
and that the magnetic circuit is provided substantially symmetrically about the centre of gravity of the lens holder.

The invention will now be described by way of example with reference to the accompanying drawings, throughout which like parts are referred to by like references, and in which:
Figure 1 is a perspective view of a known objective lens driving device;
Figure 2 is a perspective view of a first embodiment of objective lens driving device according to the present invention;
Figure 3 is an enlarged transversal cross-sectional view of the device of Figure 1;
Figure 4 is an exploded perspective view of the device of Figure 1;
Figure 5 is a perspective view of another example of a base plate;
Figure 6 is a perspective view of a second embodiment of objective lens driving device according to the present invention;
Figure 7 is a perspective view of a yoke used in the second embodiment;
Figure 8 is a perspective view of a third embodiment of objective lens driving device according to the present invention;
Figure 9 is an exploded perspective view of a yoke used in the third embodiment;
Figure 10 is a plan view of a fourth embodiment of objective lens driving device according to the present invention; and
Figure 11 is a transversal cross-sectional view of Figure 10.

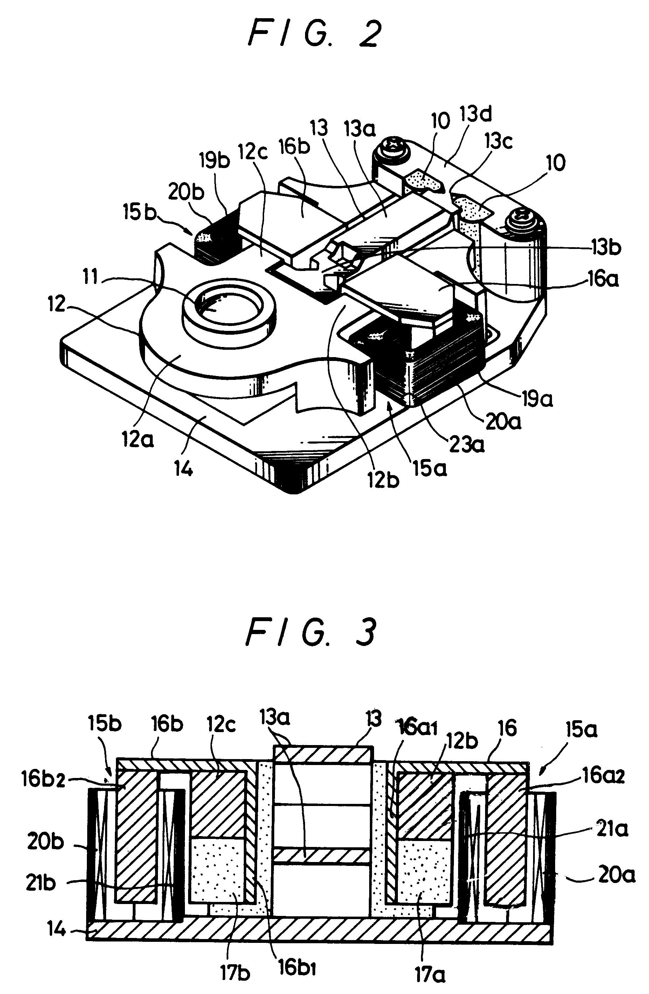

Referring to Figures 2 to 4; the first embodiment of objective lens driving device is applied to an optical pick-up device.

An objective lens 11 is mounted on a supporting member 12, which is supported by a movable supporting member 13 such that it can be moved in the up and down directions and in the lateral direction, that is, in the direction parallel to the optical axis of the objective lens 11 relative to a base plate 14, and in the direction perpendicular to the optical axis of the objective lens 11. For simplicity, the former direction will be referred to as the focusing direction, and the latter direction will be referred to as the tracking direction.

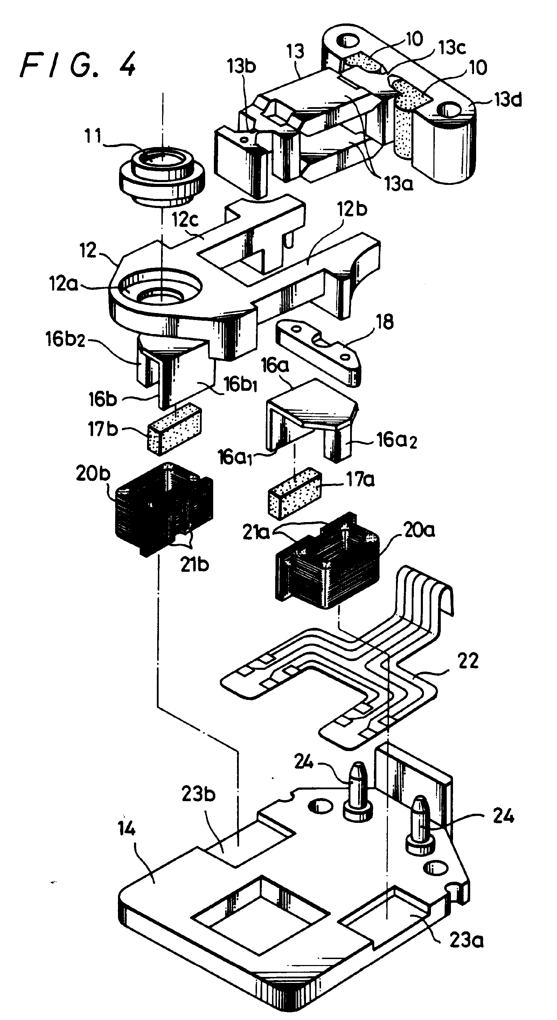

The supporting member 12 is divided at the rear side of a lens attaching portion 12a thereof to provide a pair of arm portions 12b and 12c, and the supporting member 13 is inserted between the arm portions 12b and 12c and is secured thereto at the top portion thereof. The supporting member 13 has a pair of movable portions 13a, which are formed to be parallel to each other, thin hinge portions 13b and 13c, and an attaching base end portion 13d. The movable portions 13a, the hinge portions 13b and 13c and the attaching base end portion 13d are integrally injection moulded from a synthetic resin. The hinge portion 13c is an auxiliary hinge portion, by which the supporting member 12 can be sufficiently rotated in the tracking direction. The two arm portions 12b and 12c are provided with magnetic circuits 15a and 15b, each of which forms a closed magnetic path. As shown in Figures 3 and 4, the magnetic circuits 15a and 15b are respectively formed of inverted U-shaped yokes 16a and 16b and magnetic pieces 17a and 17b. The yokes 16a and 16b are secured to the supporting member 12 at inside edge portions 16a1 and 16b1 so that the yokes 16a and 16b cross over the arm portions 12b and 12c, respectively. Outside edge portions 16a2 and 16b2 of the yokes 16a and 16b are spaced apart from the outside walls of the arm portions 12b and 12c by respective predetermined clearances. The magnetic pieces 17a and 17b are respectively secured to the lower half portions of the inside edge portions 16a1 and 16b1 with a predetermined clearance from the outside edge portions 16a2 and 16b2.

In the yokes 16a and 16b, the outside edge portions 16a2 and 16b2 are substantially square in cross-section with the widths and thicknesses substantially equal, and their cross-sectional areas are made substantially equal to those of the inside edge portions 16a1 and 16b1.

A balancer 18 is mounted on the rear portion of the supporting member 12, that is, between the rear ends of the arm portions 12b and 12c, so that the supporting member 12 is stably supported by the supporting member 13 in the front to back direction.

As shown in Figures 2 and 4, drive coils 19a and 19b are secured to the base plate 14 for the magnetic circuits 15a and 15b, respectively.

The drive coils 19a and 19b are respectively formed by coupling tracking coils 21a and 21b, each of which is formed of a pair of coils wound in substantially square-shape, to inside surfaces of focusing coils 20a and 20b wound in a cylindrical shape. The drive coils 19a and 19b are connected to a flexible printed circuit board 22 laminated on the base plate 14 and secured thereto. The heights of the drive coils 19a and 19b are selected to be greater than those of the magnetic pieces 17a and 17b. Positioning recess portions 23a and 23b are formed on the base plate 14 so as to determine the positions of the drive coils 19a and 19b. By the recess portions 23a and 23b, the drive coils 19a and 19b are accurately secured to the predetermined positions of the base plate 14. A pair of pins 24 are provided on the base plate 14 so as to secure the attaching base end portion 13d of the supporting member 13 to the base plate 14. Dampers 10 are provided in the concave portions of the attaching base end portion 13d of the supporting member 13 as shown in Figures 2 and 4.

The drive coils secured to the base plate 14, that is, the inside wall sides of the focusing coils 20a and 20b and the tracking coils 21a and 21b, are inserted between the outside edge portions 16a2 and 16b2 of the yokes 16a and 16b of the magnetic circuits and the magnetic pieces 17a and 17b, with a predetermined spacing therebetween.

In this objective lens driving device, the supporting member 12 having the objective lens 11 thereon is supported relative to the base plate 14 by the supporting member 13 so that it may be moved in the focusing direction and the tracking direction. When a predetermined focusing current is applied to the focusing coils 20a and 20b of the drive coils 19a and 19b, a force in the upper to lower direction acts on the supporting member 12 in cooperation with the magnetic flux of the magnetic circuits 15a and 15b to cause the pair of movable members 13a of the supporting member 13 to be translated up and down, that is, to cause the movable members 13a to be swung in the vertical direction, whereby the supporting member 12 is displaced in the direction parallel to the optical axis of the objective lens 11, so the laser beam is focused. When a predetermined tracking current is applied to the tracking coils 21a and 21b, a force in the lateral direction acts on the supporting member 12 to allow the hinge portion 13b to translate the supporting member 12 in the lateral direction, that is, the movable members 13a of the supporting member 13 are swung in the horizontal direction, whereby the supporting member 12 is displaced in the direction perpendicular to the optical axis of the objective lens 11, so tracking of the laser beam is effected.

In this objective lens driving device, the magnetic circuits 15a and 15b are provided on the supporting member 12 and are moved relative to the drive coils 19a and 19b provided on the base plate 14. Since the yokes 16a and 16b and the magnetic pieces 17a and 17b forming the magnetic circuits 15a and 15b are secured to the supporting member 12, this objective lens driving device has a small mechanical fluctuation and is stably operable. Moreover, since the heat generated by the focusing and tracking coils 20a and 20b, and 21a and 21b is radiated from the base plate 14, the objective lens 11 can be prevented from being affected by the heat.

Moreover, since the lead wires led out from the focusing and tracking coils 20a and 20b, and 21a and 21b, or the printed circuit board 22 are secured to the base plate 14, the printed circuit board 22 can be connected to the focusing and tracking coils 20a and 20b, and 21a and 21b easily and positively.

Alternatively, in this embodiment, although the outside edge portions 16a2 and 16b2 of the yokes 16a and 16b are shaped to be substantially square in cross section, their shapes are not limited thereto and may be modified freely. Moreover, the outside edge portions 16a2 and 16b2 may be unitarily formed with the inside edge portions 16a1 and 16b1. Also, magnetic pieces may be attached to the outside edge portions 16a2 and 16b2. In addition, the supporting member 12 may be made of various kinds of material, so long as it is non-magnetic. In particular, it is preferable that the supporting member 12 be made of a light-weight non-magnetic material.

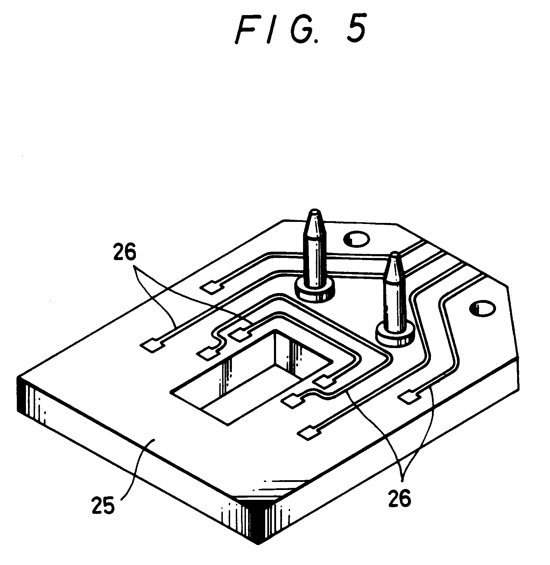

Figure 5 shows a perspective view of another example of a base plate of the objective lens driving device. This base plate 25 is formed by a printed circuit board in which wiring patterns 26 are formed on, for example, a glass epoxy resin substrate. In this case, the focusing and tracking coils are connected to the lead wires merely by securing the focusing and tracking coils to the base plate 25, so the assembly is simplified.

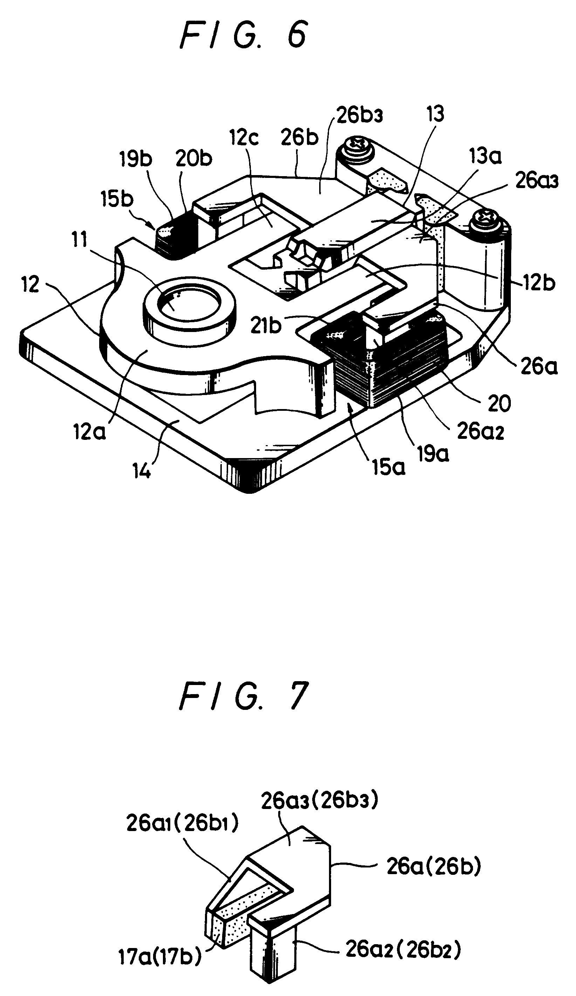

The second embodiment of objective lens driving device will be described with reference to Figures 6 and 7.

In this embodiment, the magnetic circuits 15a and 15b mounted on the supporting member 12 to which the objective lens 11 is attached are improved, and the return magnetic paths of yokes are made asymmetrical relative to a straight line which passes through the centre of gravity of the movable portion of the objective lens driving device.

More specifically, the magnetic circuits 15a and 15b are formed of yokes 26a and 26b. Inside edge portions 26a1 and 26b1 and outside edge portions 26a2 and 26b2 of the yokes 26a and 26b are shaped substantially the same as the inside and outside edge portions 16a1 and 16b1, and 16a2 and 16b2 of the yokes 16a and 16b of the first embodiment. Upper side wall portions 26a3 and 26b3 of the yokes 26a and 26b are displaced rearward ie towards the base end portion 13d.

If the thus arranged yokes 26a and 26b are secured to the arm portions 12b and 12c of the supporting member 12 similarly to the first embodiment, then the upper side wall portions 26a3 and 26b3 are coupled to the rear end upper surfaces of the arm portions 12b and 12c, whereby the supporting member 12 can be well balanced in the front to back direction. Therefore, without providing the balancer 18 of the first embodiment between the rear ends of the arm portions 12b and 12c, the centre of gravity can be determined with sufficiently high accuracy. Also, the assembly can be simplified.

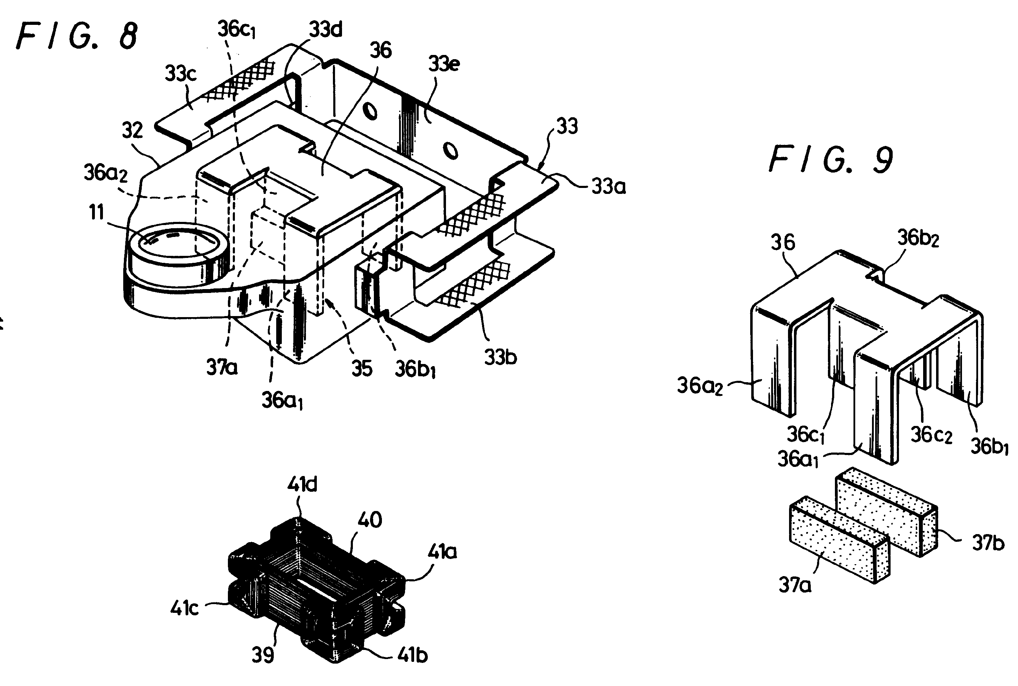

The third embodiment of objective lens driving device will be described with reference to Figures 8 and 9. In this embodiment, a magnetic circuit is provided at the central portion (centre of gravity portion) of the supporting member on which the objective lens is mounted.

In this embodiment, the objective lens 11 is attached to a lens holder 32, which is supported from the two sides thereof by a supporting member 33 so that it can be slidably translated in the up and down direction (focusing direction) and in the lateral direction (tracking direction). The supporting member 33 is formed as proposed in our published patent application EP-A-394 032. That is, the supporting member 33 integrally comprises four arm members 33a, 33b, 33c and 33d which support at one side thereof the supporting member 32 from its two side surfaces, and a coupling member 33e which couples the other sides of the four arm members 33a, 33b, 33c and 33d.

A magnetic circuit 35 is provided at the central portion of the lens holder 32 supported at the two side surfaces thereof by the supporting member 33. A yoke 36 of the magnetic circuit 35 comprises outside edge portions 36a1, 36a2, 36b1 and 36b2, inside edge portions 36c1 and 36c2, and magnet pieces 37a and 37b. More specifically, as shown in Figure 9, the inside edge portions 36c1 and 36c2 are opposed to each other with a predetermined spacing between the outside edge portions 36a1 and 36a2, and 36b1 and 36b2. Also, the magnet pieces 37a and 37b are secured to the inside edge portions 36c1 and 36c2 with a predetermined spacing relative to the outside edge portions 36a1 and 36a2, and 36b1 and 36b2.

The yoke 36 is secured downwardly to a concave portion formed on the central portion of the lens holder 32 so as to be opposite a drive coil 39 secured to the base plate. The drive coil 39 is formed by coupling tracking coils 41a, 41b, 41c and 41d of substantially square shapes to outer corner portions of a focusing coil 40 which is wound in a rectangular cylindrical shape. When the yoke 36 is opposed to the drive coil 39, the inside edge portions 36c1 and 36c2 of the yoke 36 are inserted into the hollow portion of the focusing coil 40 together with the magnetic pieces 37a and 37b. Also, the outside edge portions 36a1 and 36a2, and 36b1 and 36b2 of the yoke 36 are opposed to the tracking coils 41a, 41b, 41c and 41d on the outer surface of the focusing coil 40, thereby forming the magnetic drive section.

When a predetermined current is applied to the focusing coil 40 and the tracking coil, a force in the up and down direction and a force in the lateral direction act on the lens holder 32, so it is displaced in the direction parallel to the optical axis of the objective lens 11 and in the direction perpendicular to the optical axis of the objective lens 11 by the swinging movement of the supporting member 33, for focusing and tracking of the laser beam.

In this embodiment, since similar effects to those of the above embodiments are achieved, and the magnetic circuit 35 formed of the yoke 36 and the magnet pieces 37a and 37b is provided at the centre of gravity portion of the lens holder 32, and hence the supporting member 32 can be displaced stably, the focusing and tracking of the laser beam by the objective lens 11 can be carried out more precisely.

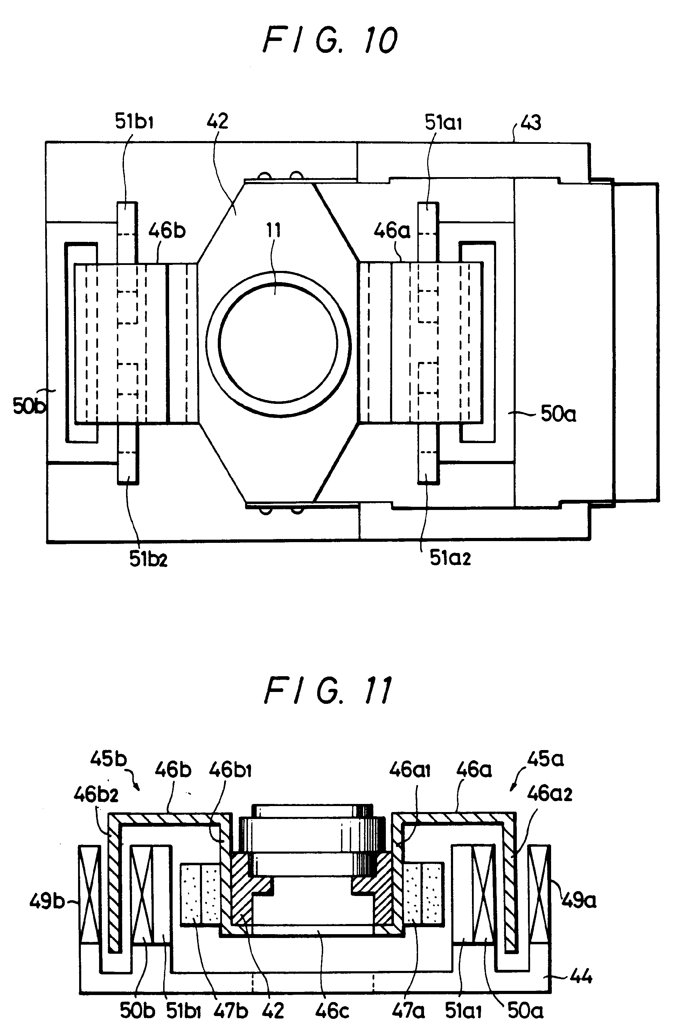

Figures 10 and 11 illustrate the fourth embodiment of the objective lens driving device, in which left and right closed magnetic paths forming portions of the magnetic circuit are formed continuously.

As shown in Figure 10, a supporting member 42 to which the objective lens 11 is attached can be translated in the up and down direction (focusing direction) and in the lateral direction (tracking direction) from the two side wall sides by a supporting member 43 which is formed similarly to the supporting member 33 shown in Figure 8. Yokes 46a and 46b forming magnetic circuits 45a and 45b are moulded as a magnetic plate-shaped material and are secured to the supporting member 42.

As shown in Figure 11, the yokes 46a and 46b are of inverted U-shape, and lower end edges of inside edge portions 46a1 and 46b1 thereof are coupled together by a horizontal surface portion 46c. The yokes 46a and 46b are secured at the horizontal surface portion 46c to the supporting member 42.

In the yokes 46a and 46b, magnetic pieces 47a and 47b are secured to inside surfaces of the inside edge portions 46a1 and 46b1, and outside edge portions 46a2 and 46b2 thereof are inserted into drive coils 49a and 49b secured to a base plate 44.

More specifically, similarly to the first embodiment shown in Figures 2 to 4, the drive coils 49a and 49b are formed by coupling two pairs of tracking coils 51a1 and 51a2, and 51b1 and 51b2 wound in substantially square shape to the inside surface sides of focusing coils 50a and 50b wound in rectangular cylindrical shape. When the outside edge portions 46a2 and 46b2 of the yokes 46a and 46b are inserted into the hollow portions of the focusing coils 50a and 50b, the inside edge portions of the focusing coils 50a and 50b and the tracking coils 51a1 and 51a2, and 51b1 and 51b2 are positioned in the predetermined spacings between the outside edge portions 46a2 and 46b2 and the magnetic members 47a and 47b of the inside edge portions 46a1 and 46b1, thus forming the magnetic drive section.

When a predetermined current is supplied to the focusing coils and the tracking coils, similarly to the above embodiments, the force in the up and down direction and the force in the lateral direction act on the supporting member 42 so that it is translated in the predetermined directions via the supporting member 43, thus allowing the objective lens 11 to effect focusing and the tracking of the laser beam.

Also in this embodiment, similar effects to those of the above embodiments are achieved. The left and right yokes 46a and 46b are easily moulded by a press-moulding process of magnetic plate-shaped material or the like, and the number of parts to be assembled can be reduced. Moreover, the yokes 46a and 46b can easily be secured to the supporting member 42 and the assembly simplified.

With the embodiments described, since the closed magnetic circuit is provided on the supporting member to which the objective lens is attached, and the focusing and tracking coils are provided on the base plate side, heat generated in the focusing and tracking coils can be effectively radiated, and the objective lens can be protected from being affected by the heat.

Moreover, mechanical scatter of the balance of the supporting member can be reduced, whereby the focusing and tracking of the laser beam by the objective lens can always be carried out accurately.

Furthermore, the lead wires of the coils can easily be led out, and the number of parts to be assembled can be reduced, so reducing the cost.

## Claims

1. An objective lens driving device comprising:
an objective lens (11) mounted in a lens holder (12);
supporting means (13) having the lens holder and the objective lens (11) attached thereto and being supported such that the lens holder (12) is movable and can be translated in a first direction parallel to the optical axis direction of the objective lens (11) and a second direction perpendicular to said optical axis direction;
a magnetic circuit (15) provided on the lens holder (12) to form a closed magnetic path;
a focusing coil (20) to cooperate with the magnetic circuit (15) to move the objective lens (11) in said first direction and a tracking coil (21) to cooperate with said magnetic circuit (15) to move the objective lens (11) in said second direction, the focusing coil (20) and the tracking coil (21) being opposed to each other with a predetermined spacing relative to the magnetic circuit (15);
a stationary portion (14) on which the lens holder (12) is mounted by the supporting means (13), the focusing coil (20) and the tracking coil (21) being mounted on the stationary portion (14);
wherein the magnetic circuit (15) comprises two yokes (26a, 26b) disposed symmetrically in relation to the optical axis of the lens (11) and each formed of a pair of plane portions (26a1, 26b1, 26a2, 26b2) opposed to each other, a coupling portion (26a3, 26b3) connecting the pair of plane portions and a magnetic piece (17a, 17b) provided on one of the plane portions of the yoke (26a, 26b);
characterised in that the coupling portions (26a3, 26b3) of the yokes are asymmetrical about a straight line passing through the centre of gravity of the movable lens holder so that the coupling portion (26a3, 26b3) of each yoke (26a. 26b) couples the plane portions at positions displaced towards a position at which the supporting means for the lens holder (12) is coupled to the stationary portion (14).

2. A device according to claim 1 wherein the stationary portion (14) has formed thereon a wiring pattern (22) to supply a drive current to the focusing and tracking coils (20, 21).

3. An objective lens driving device comprising:
an objective lens (11) mounted in a lens holder (32);
supporting means (33) having the lens holder and the objective lens (11) attached thereto and being supported such that the lens holder is movable and can be translated in a first direction parallel to the optical axis direction of the objective lens (11) and a second direction perpendicular to said optical axis direction;
a magnetic circuit (36) provided on the lens holder (32) to form a closed magnetic path;
a focusing coil (40) to cooperate with the magnetic circuit to move the objective lens (11) in said first direction; and
a tracking coil (41) to cooperate with said magnetic circuit to move the objective lens (11) in said second direction, the focusing coil (40) and the tracking coil (41) being opposed to each other with a predetermined spacing relative to the magnetic circuit;
a stationary portion (14) on which the lens holder (12) is mounted by the supporting means, the focusing coil (40) and the tracking coil (41) being mounted on the stationary portion (14);
characterised in that the magnetic circuit comprises a yoke (36) formed of first and second plane portions (36a1, 36a2, 36b1, 36b2), third plane portions (36c1, 36c2) opposed to said first and second plane portions with a predetermined spacing, a coupling portion coupling said first, second and third plane portions and magnetic pieces (37a, 37b) attached to the third plane portions;
and that the magnetic circuit is provided substantially symmetrically about the centre of gravity of the lens holder.

4. A device according to claim 3 wherein said first and second plane portions (36a1, 36a2, 36b1, 36b2) of said yoke (36) are provided so as to oppose the tracking coil (41).

## Patentansprüche

1. Objektivantriebsvorrichtung
mit einem in einem Linsenhalter (12) montierten Objektiv (11),
mit einer Halterungseinrichtung (13), an der der Linsenhalter und das Objektiv (11) befestigt sind und die so gelagert ist, daß der Linsenhalter (12) bewegbar ist und eine Translationsbewegung in einer parallel zur optischen Achse des Objektivs (11) verlaufenden ersten Richtung und in einer senkrecht zur optischen Achse des Objektivs (11) verlaufenden zweiten Richtung ausführen kann,
mit einem an dem Linsenhalter (12) vorgesehenen magnetischen Kreis (15) zur Bildung eines geschlossenen magnetischen Pfads,
mit einer mit dem magnetischen Kreis (15) zusammenwirkenden Fokussierungsspule (20) zum Bewegen des Objektivs (11) in der genannten ersten Richtung und einer mit dem magnetischen Kreis (15) zusammenwirkenden Spurführungsspule (21) zum Bewegen des Objektivs (11) in der genannten zweiten Richtung, wobei die Fokussierungsspule (20) und die Spurführungsspule (21) relativ zu dem magnetischen Kreis (15) in entgegengesetzten Positionen mit einem vorbestimmten gegenseitigen Abstand angeordnet sind,
mit einem stationären Teil (14), an dem der Linsenhalter (12) mit Hilfe der Halterungseinrichtung (13) montiert ist und an dem auch die Fokussierungsspule (20) und die Spurführungsspule (21) montiert sind,
wobei der magnetische Kreis (15) zwei Joche (26a, 26b) umfaßt, die relativ zu der optischen Achse des Objektiv symmetrisch angeordnet sind und die jeweils bestehen aus einem Paar von einander gegenüberliegenden ebenen Abschnitten (26a1, 26a2, 26b1, 26b2), einem das Paar von ebenen Abschnitten miteinander verbindenden Kopplungsabschnitt (26a3, 26b3) und einem an einem der ebenen Abschnitte des Jochs (26a, 26b) angeordneten Magnetstück (25),
**dadurch gekennzeichnet**,
daß die Kopplungsabschnitte (26a3, 26b3) der Joche (26a, 26b) asymmetrisch um eine durch den Schwerpunkt des bewegbaren Linsenhalters verlaufende gerade Linie angeordnet sind, so daß der Kopplungsabschnitt (26a3, 26b3) jedes Jochs (26a, 26b) die ebenen Abschnitte in Positionen verbindet, die in Richtung auf eine Position versetzt sind, an der die Halterungseinrichtung für den Linsenhalter (12) mit dem stationären Teil (14) verbunden ist.

2. Vorrichtung nach Anspruch 1, bei der auf dem stationären Teil (14) ein Verdrahtungsmuster (22) ausgebildet ist, um der Fokussierungsspule (20) und der Spurführungsspule (21) einen Antriebsstrom zuzuführen.

3. Objektivantriebsvorrichtung
mit einem in einem Linsenhalter (12) montierten Objektiv (11),
mit einer Halterungseinrichtung (33), an der der Linsenhalter und das Objektiv (11) befestigt sind und die so gelagert ist, daß der Linsenhalter (32) bewegbar ist und eine Translationsbewegung in einer parallel zur optischen Achse des Objektivs (11) verlaufenden ersten Richtung und in einer senkrecht zur optischen Achse des Objektivs (11) verlaufenden zweiten Richtung ausführen kann,
mit einem an dem Linsenhalter (32) vorgesehenen magnetischen Kreis (15) zur Bildung eines geschlossenen magnetischen Pfads,
mit einer mit dem magnetischen Kreis zusammenwirkenden Fokussierungsspule (40) zum Bewegen des Objektivs (11) in der genannten ersten Richtung
und einer mit dem magnetischen Kreis zusammenwirkenden Spurführungsspule (41) zum Bewegen des Objektivs (11) in der genannten zweiten Richtung, wobei die Fokussierungsspule (20) und die Spurführungsspule (21) relativ zu dem magnetischen Kreis (15) in entgegengesetzten Positionen mit einem vorbestimmten gegenseitigen Abstand angeordnet sind,
mit einem stationären Teil (14), an dem der Linsenhalter (12) mit Hilfe der Halterungseinrichtung (13) montiert ist und an dem auch die Fokussierungsspule (20) und die Spurführungsspule (21) montiert sind,
**dadurch gekennzeichnet**,
daß der magnetische Kreis ein Joch (36) umfaßt, bestehend aus ersten und zweiten ebenen Abschnitten (36a1, 36a2, 36b1, 36b2), dritten ebenen Abschnitten (36c1, 36c2), die den ersten und zweiten ebenen Abschnitten mit einem vorbestimmten Abstand gegenüberliegen, einem Kopplungsabschnitt, der die ersten, zweiten und dritten ebenen Abschnitte miteinander verbindet, und Magnetstücken (37a, 37b), die an den dritten ebenen Abschnitten befestigt sind,
und daß der magnetische Kreis im wesentlichen symmetrisch um den Schwerpunkt des Linsenhalters angeordnet ist.

4. Vorrichtung nach Anspruch 4, bei der die ersten und zweiten ebenen Abschnitten (36a1, 36a2, 36b1, 36b2) des Jochs (36) so angeordnet sind, daß sie der Spurführungsspule (41) gegenüberliegen.

## Revendications

1. Appareil de pilotage d'objectif, comprenant :
un objectif (11) monté sur un porte-objectif (12),
un dispositif (13) de support auquel sont fixés le porte-objectif et l'objectif (11) et supporté de manière que le porte-objectif (12) soit mobile et puisse se déplacer en translation dans une première direction parallèle à la direction de l'axe optique de l'objectif (11) et dans une seconde direction perpendiculaire à la direction de l'axe optique,
un circuit magnétique (15) placé sur le porte-objectif (12) et destiné à former un trajet magnétique fermé,
un enroulement (20) de focalisation destiné à coopérer avec le circuit magnétique (15) afin qu'il déplace l'objectif (11) dans la première direction et un enroulement (21) de poursuite destiné à coopérer avec le circuit magnétique (15) afin qu'il déplace l'objectif (11) dans la seconde direction, l'enroulement (20) de focalisation et l'enroulement (21) de poursuite étant opposés l'un à l'autre avec un espacement prédéterminé par rapport au circuit magnétique (15), et
une partie fixe (14) sur laquelle est monté le porte-objectif (12) par le dispositif de support (13), l'enroulement (20) de focalisation et l'enroulement (21) de poursuite étant montés sur la partie fixe (14),
dans lequel le circuit magnétique (15) comporte deux culasses (26a, 26b) disposées symétriquement par rapport à l'axe optique de l'objectif (11) et formées chacune d'une paire de parties planes (26a1, 26b1, 26a2, 26b2) opposées l'une à l'autre, une partie d'accouplement (26a3, 26b3) raccordant la paire de parties planes, et une pièce magnétique (17a, 17b) placée sur l'une des parties planes de la culasse (26a, 26b),
caractérisé en ce que les parties d'accouplement (26a3, 26b3) des culasses sont asymétriques par rapport à une droite passant par le centre de gravité du porte-objectif mobile de manière que la partie d'accouplement (26a3, 26b3) de chaque culasse (26a, 26b) couple les parties planes à des positions décalées vers une position dans laquelle le dispositif de support du porte-objectif (12) est couplé à la partie fixe (14).

2. Appareil selon la revendication 1, dans lequel la partie fixe (14) possède un dessin de câblage (22) formé à sa surface et destiné à transmettre un courant de pilotage aux enroulements de focalisation et de poursuite (20, 21).

3. Appareil de pilotage d'objectif, comprenant :
un objectif (11) monté sur un porte-objectif (32),
un dispositif de support (33) ayant le porte-objectif et l'objectif (11) fixé à celui-ci et supporté de manière que le porte-objectif soit mobile et puisse être déplacé en translation dans une première direction parallèle à la direction de l'axe optique de l'objectif (11) et une seconde direction perpendiculaire à la direction de l'axe optique,
un circuit magnétique (36) placé sur le porte-objectif (32) et destiné à former un trajet magnétique fermé,
un enroulement de focalisation (40) destiné à coopérer avec le circuit magnétique afin qu'il déplace l'objectif (11) dans la première direction, et
un enroulement de poursuite (41) destiné à coopérer avec le circuit magnétique afin qu'il déplace l'objectif (11) dans la seconde direction, l'enroulement de focalisation (40) et l'enroulement de poursuite (41) étant opposés l'un à l'autre avec un espacement prédéterminé par rapport au circuit magnétique,
une partie fixe (14) sur laquelle est monté le porte-objectif (12) à l'aide du dispositif de support, l'enroulement de focalisation (40) et l'enroulement de poursuite (41) étant montés sur la partie fixe (14),
caractérisé en ce que le circuit magnétique comporte une culasse (36) formée de premières et secondes parties planes (36a1, 36a2, 36b1, 36b2), des troisièmes parties planes (36cl, 36c2) opposées aux premières et secondes parties planes avec un espace prédéterminé, une partie d'accouplement des premières, secondes et troisièmes parties planes, et des pièces magnétiques (37a, 37b) fixées aux troisièmes parties planes, et
en ce que le circuit magnétique est placé de manière pratiquement symétrique par rapport au centre de gravité du porte-objectif.

4. Appareil selon la revendication 3, dans lequel les premières et secondes parties planes (36a1, 36a2, 36b1, 36b2) de la culasse (36) sont destinées à être en face de l'enroulement de poursuite (41).
